# EUROPÄISCHE PATENTSCHRIFT

(11) **EP 2 522 886 B1**
(45) Veröffentlichungstag und Bekanntmachung des Hinweises auf die Patenterteilung: **11.10.2017**
(21) Anmeldenummer: 11003789.2
(22) Anmeldetag: 09.05.2011
(51) Int. Cl.: F16K 1/46

(54) **Ventiloberteil**
Valve top
Partie supérieure de soupape

(43) Veröffentlichungstag der Anmeldung: 14.11.2012
(73) Patentinhaber: Flühs Drehtechnik GmbH, D-58515 Lüdenscheid (DE)
(72) Erfinder: Lange, Lutz, 58511 Lüdenscheid (DE)
(74) Vertreter: Patentanwälte Dörner & Kötter PartG mbB

(56) Entgegenhaltungen:
- DE-A1- 19 900 271
- DE-A1-102004 063 973
- FR-A1- 2 742 206
- GB-A- 2 137 736
- US-A1- 2006 102 866

## Beschreibung

Die Erfindung betrifft ein Ventiloberteil mit einem Kopfstück, einer das Kopfstück mittig durchsetzenden Spindel und einem über die Spindel betätigbaren Ventilkörper zur Anlage an einem Ventilsitz eines Gehäuses nach dem Oberbegriff des Patentanspruchs 1, wie bekannt aus der DE 19900271 A1.

Ein weiteres Ventiloberteil ist aus der GB 2 137 736 A bekannt. Das Ventiloberteil dient der Steuerung des Austritts von Medien aus Armaturen. Zu diesem Zweck wird das Ventiloberteil mittels seines Kopfstücks in das Gehäuse einer Armatur geschraubt; auf seine Spindel wird ein Drehgriff oder Hebel befestigt. Zur Steuerung des Durchflusses ist ein Ventilstempel vorgesehen, der über die Spindel innerhalb des Kopfstücks linear bewegbar ist. Zur Abdichtung gegen den Ventilsitz nimmt der Ventilstempel eine Scheibe auf, die über eine Mutter oder einen angeformten Pilzkopf an dem Ventilstempel befestigt ist und die mit einer Bohrung versehen ist, welche eine Hinterspülung der Scheibe ermöglicht, wodurch die Scheibe sowie ein diese umgebender Dichtring gegen den Ventilsitz gepresst wird. Dabei ist der Dichtring aufgrund der besonders elastischen Eigenschaften aus Gummi hergestellt.

Nachteilig an dem vorbekannten Ventiloberteil ist, dass die Herstellung der Scheibe sowie ihrer Montage sehr aufwendig ist. Darüber hinaus genügt der zum Einsatz kommende Dichtring zunehmend nicht den immer strenger werdenden Anforderungen in Bezug auf Haltbarkeit und Dichtigkeit.

Hier will die Erfindung Abhilfe schaffen. Der Erfindung liegt die Aufgabe zu Grunde, ein Ventiloberteil der vorgenannten Art zu schaffen, bei der die Herstellung vereinfacht ist und dessen Dichtvorrichtung auch den zunehmend strengen Anforderung hinsichtlich Haltbarkeit und Dichtigkeit genüg. Gemäß der Erfindung wird diese Aufgabe durch die Merkmale des kennzeichnenden Teils des Patentanspruchs 1 gelöst.

Mit der Erfindung ist ein Ventiloberteil geschaffen, bei dem die Herstellung vereinfacht ist und dessen Dichtvorrichtung den zunehmend strengen Anforderungen hinsichtlich Haltbarkeit und Dichtigkeit genügt. Durch die Verwendung einer aus Kunststoff hergestellten Dichtscheibe ist eine stabile Anordnung mit einer flächigen Dichtwirkung erzielbar. Dabei wurde überraschend gefunden, dass durch eine solche Kunststoffscheibe eine hinreichende Dichtwirkung bei unterschiedlichen Gestaltungen von Ventilsitzen verschiedener Armaturengehäuse erzielt werden kann. Dle Dichtscheibe ist zumindest auf ihrer dem Ventilstempel abgewandten Seite mit einer waffelartigen Mikrostruktur versehen. Hierdurch ist die Elastizität der Oberfläche erhöht, wodurch die Dichtwirkung der verbessert ist. Alternativ ist die Dichtscheibe zumindest auf ihrer dem Ventilstempel abgewandten Seite mit einer ein Rippenmuster aufweisenden Makrostruktur versehen. Hierdurch ist eine weitere elastische Schicht gebildet, wodurch die Dichtwirkung weiter verbessert ist. Dabei ist das Rippenmuster vorteilhaft aus ringförmigen, bevorzugt aus kreisringförmigen Rippen gebildet. Bei Ausbildung eines Rippenmusters auf beiden Seiten der Dichtscheibe ist eine höhere Vorspannung erzielbar, wodurch eine höhere Dichtwirkung bewirkt ist. Eine Anlagefläche der Dichtscheibe, nämlich die an dem Ventilsitz des Armaturenweite zur Anlage kommende Anlagefläche, ist konvex bzw. ballig ausgebildet. Hierdurch ist eine Vorspannung erzielbar, durch welche die Dichtwirkung erhöht ist. Bevorzugt sind beide Anlageflächen der Dichtscheibe konvex ausgebildet, wodurch dieser Effekt noch verstärkt ist.

In Weiterbildung der Erfindung ist die Dichtscheibe aus Polytetrafluorethylen (PTFE) hergestellt. Dieses Material zeichnet sich durch seine hohe Beständigkeit und Haltbarkeit aus.

Besonders bevorzugt ist die Dichtscheibe aus ultrahochmolekularem Polyethylen (PE-UHMW) hergestellt. Überraschend wurde herausgefunden, dass dieses aus dem Bereich der Förderbandtechnik bekannte Material sich für die Herstellung von Dichtscheiben für Ventiloberteile sehr gut eignet. Aus PE-UHMW hergestellt Dichtscheiben weisen ein gutes Dichtverhalten bei vergleichweise geringem Anpressdruck auf.

In Ausgestaltung der Erfindung ist der Ventilstempel mit einer konzentrisch zur Spindelachse mit einer Nut zur Aufnahme der Dichtscheibe versehen. Hierdurch ist eine gute Fixierung der Dichtscheibe erzielt. Darüber hinaus ist die Montage der Dichtscheibe vereinfacht.

In Weiterbildung der Erfindung ist an dem Ventilstempel an seiner der Nut zugewandten Seite auf der Spindelachse ein Stift angeformt, der zur Aufnahme eines Befestigungselementes zur Fixierung der Dichtscheibe ausgebildet ist. Durch die Fixierung der Dichtscheibe sind relative Bewegungen der Dichtscheibe innerhalb der Nut vermieden, wodurch der Verschleiß weiter reduziert ist.

In Ausgestaltung der Erfindung ist der Stift zumindest bereichsweise mit einem Gewinde zur Aufnahme eines Schrauben- oder Mutternkörpers versehen. Hierdurch ist eine einfachere Montage des als Befestigungselement zum Einsatz kommenden Schrauben- oder Mutternkörpers erzielt.

In weitere Ausgestaltung der Erfindung ist der Stift mit einem Außengewinde versehen, auf dem eine Hutmutter die Dichtscheibe einklemmend aufgeschraubt ist. Durch die Hutmutter ist eine vollständige Abschottung des Stiftes gegenüber dem umströmenden Medium erzielt.

In Weiterbildung der Erfindung ist das Ventiloberteil im Hinblick auf das Armaturengehäuse, in dem es zum Einsatz kommt, derart ausgebildet, dass der Außendurchmesser des Ventilstempels im Wesentlichen dem Innendurchmesser des Anschlussgewindes des Armaturengehäuses entspricht. Hierdurch Ist eine hohe Stabilität des Ventilstempels bewirkt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

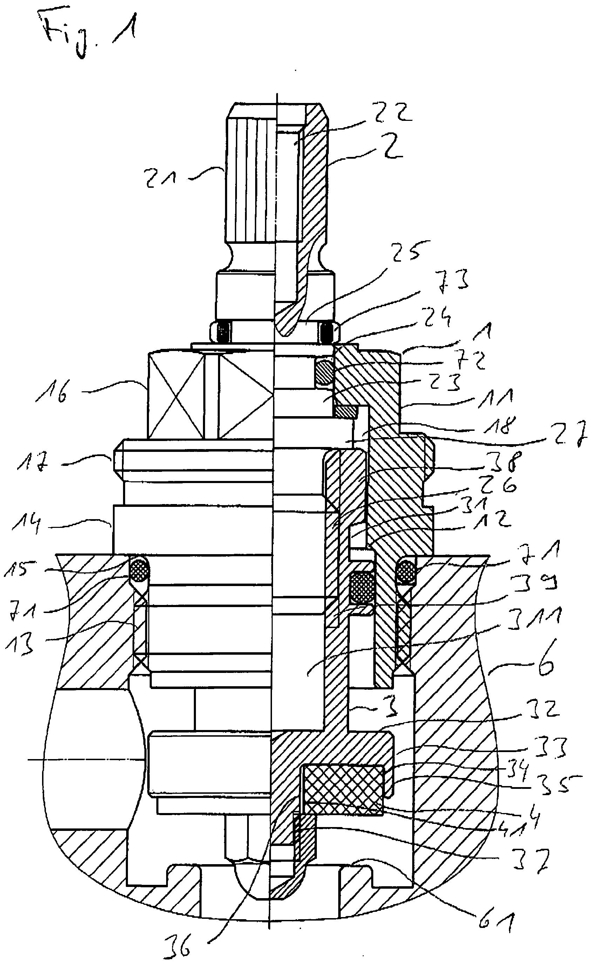

- Figur. 1: die Darstellung eines gattungsgemäßen Ventiloberteils teilweise in Ansicht, teilweise im Axialschnitt;
- Figur 2: die Darstellung des Ventiloberteils aus Figur 1 mit an beiden Anlageflächen konvex ausgebildeter Dichtscheibe und
- Figur 3: die Darstellung des Ventiloberteils aus Figur 1 mit an beiden Anlageflächen rippenförmig ausgebildeter Makrostruktur.

Das als Ausführungsbeispiel gewählte Ventiloberteil weist ein Kopfstück 1 auf, das von einer in dieser radial geführten Spindel 2 mittig durchsetzt ist. Über die Spindel 2 ist ein Ventilkörper 3 betätigbar, der mit dem Ventilsitz 61 des Gehäuses 6 zur Anlage kommt. Der Ventilkörper 3 weist einen im wesentlichen zylindrischen Ventilstempel 33 auf, der eine Dichtscheibe 4 aufnimmt, die von dem umlaufenden Rand 35 der die Dichtscheibe 4 aufnehmenden Nut 34 umgeben ist, wobei die Dichtscheibe 4 sowie der umlaufende Rand 35 der Nut 34 mit dem Ventilsitz 61 des Gehäuses 6 zur Anlage kommen.

Das Kopfstück 1 besteht aus einem symmetrischen Hohlkörper, dessen beide Stirnflächen offen sind. Auf seiner dem Gehäuse 6 zugewandten Seite weist das Kopfstück einen hülsenartigen Teil 11 auf. An dem Teil 11 ist innen umlaufend ein Anschlag 12 zur Anlage des Ventilkörpers 3 angeformt. An seinem dem Gehäuse 6 zugewandten Ende ist das Kopfstück 1 außen mit einem Anschlussgewinde 13 versehen. Mit Hilfe des Anschlussgewindes 13 ist das Kopfstück 1 in das Gehäuse 6 der Armatur einschraubbar.

Nach dem Einschrauben liegt ein Einschraubbund 14 des Kopfstücks 1 auf dem Gehäuse 6 der Armatur auf. Der Einschraubbund 14 weist auf seiner dem Anschlussgewinde 13 zugewandten Seite eine Ringnut 15 zur Aufnahme des O-Rings 71 auf. Das Einschrauben in die Armatur erfolgt mittels eines Außenmehrkants 16, der auf der dem Anschlussgewinde 13 abgewandten Seite des Einschraubbundes 14 vorgesehen ist. Dieser Teil des Kopfstücks 1 kann außen - wie dargestelit - mit einem zusätzlichen Gewinde 17 für die Aufnahme einer - nicht dargesteliten - Hülse versehen sein. In Höhe des Einschraubbundes 14 und des Gewindes 17 ist der hülsenartige Teil 11 des Kopfstücks 1 innen mit einem Innensechskant 18 versehen.

Die Spindel 2 ist im Wesentlichen massiv ausgeführt. Sie ist an ihrer dem Kopfstück 1 abgewandten Seite außen als Außenvielkant 21 ausgeführt und innen mit einem Sackloch 22 mit Innengewinde für die Befestigung eines - nicht dargestellten - Drehgriffs versehen. Anschließend ist außen an der Spindel 2 eine Zylinderfläche 23 vorgesehen, mit der die Spindel 2 in dem Kopfstück 1 radial geführt ist. In der Zylinderfläche 23 ist eine Ringnut 24 zur Aufnahme eines O-Rings 72 eingebracht. Der O-Ring 72 dichtet die Spindel 2 gegen das Kopfstück 1 ab. Zwischen der Zylinderfläche 23 und dem Außenvielkant 21 ist ein Einstich 25 vorsehen, in den eine Wellensicherung 73 in Form eines Sprengrings federnd eingelegt ist. Die Wellensicherung 73 verhindert das Eindringen der Spindel 2 in das Kopfstück 1 über das vorgesehene Maß hinaus.

Die Spindel 2 ist in dem Kopfstück 1 drehbar. Auf ihrer dem Außenvielkant 21 entgegengerichteten Seite weist die Spindel 2 ein Außengewinde 26 auf. Oberhalb des Außengewindes 26 ist ein Einschraubbund 27 angeformt.

Der Ventilkörper 3 weist einen hohlzylindrischen Teil 31 auf, der über einen zylindrischen Absatz 32 mit einem Ventilstempel 33 verbunden ist. Konzentrisch zur Rotationsachse der Spindel 2 ist in den Ventilstempel 33 eine Nut 34 zur Aufnahme der Dichtscheibe 4 eingebracht. Die Nut 34 ist nach außen begrenzt durch einen umlaufenden Rand 35. Nach innen ist die Nut 34 begrenzt durch einen auf der Rotationsachse der Spindel 2 an den Ventilstempel 33 angeformten Stift 36 der oberhalb der Nut 34 mit einem Außengewinde 37 versehen ist. An seinem dem Ventilstempel 33 abgewandten Ende ist an dem hohlzylindrischen Teil 31 ein Außensechskant 38 angeformt. Der Außensechskant 38 dient der Verdrehsicherung des Ventilkörpers 3 innerhalb des Kopfstücks 1. Ihnen ist der hohlzylindrische Teil 31 mit einem Innengewinde 39 versehen.

Die Dichtscheibe 4 ist im Ausführungsbeispiel aus PE-UHMW hergestellt und kreisrund ausgebildet. Dabei entspricht der Außendurchmesser der Dichtscheibe 4 im Wesentlichen dem Innendurchmesser des umlaufenden Randes 35 der Nut 34. Die Anlageflächen der Dichtscheibe sind mit einer - nicht dargesteliten - waffelförmigen Mikrostruktur versehen. Mittig ist in die Scheibe 4 eine Bohrung 41 eingebracht. Dabei ist der Durchmesser der Bohrung 41 etwas größer gewählt als der Außendurchmesser des Stiftes 36 des Ventilstempels 33 im Bereich der Nut 34, der die Scheibe 4 aufnimmt. Die Dichtscheibe 4 ist über eine Hutmutter 5 innerhalb der Nut 34 fixiert, welche auf das Außengewinde 37 des Stifts 36 aufgeschraubt ist.

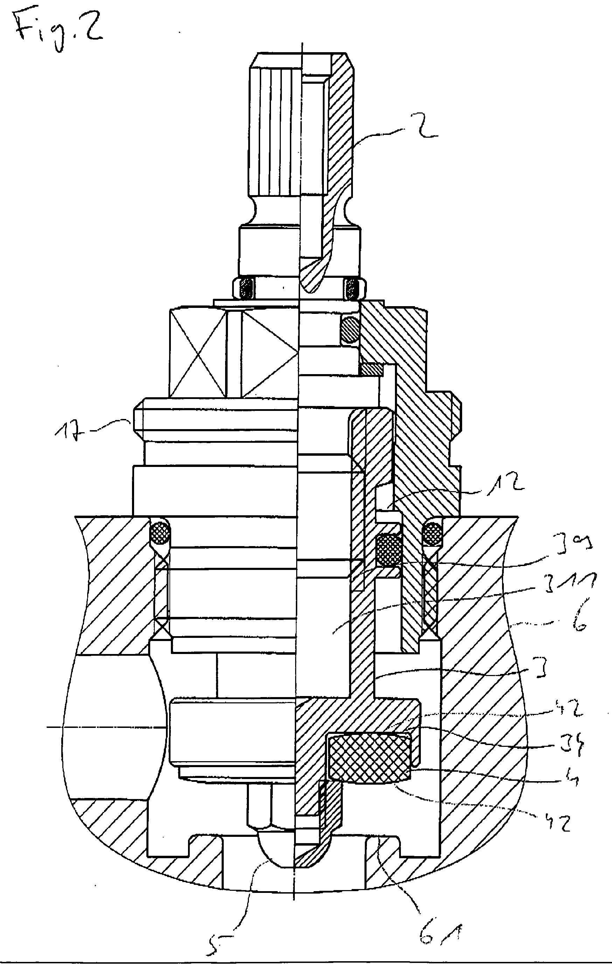

Im Ausführungsbeispiel gemäß Figur 2 sind die Anlageflächen 42 der Dichtscheibe 4 konvex bzw. ballig ausgebildet. Wird die Dichtscheibe gegen den Ventilsitz 61 eine Armaturengehäuses 6 gepresst, so wird diese an den Grund der Nut 34 gedrückt, wodurch eine Vorspannung bewirkt ist. Derselbe Effekt ergibt sich zwischen Dichtscheibe 4 und Ventilsitz 61.

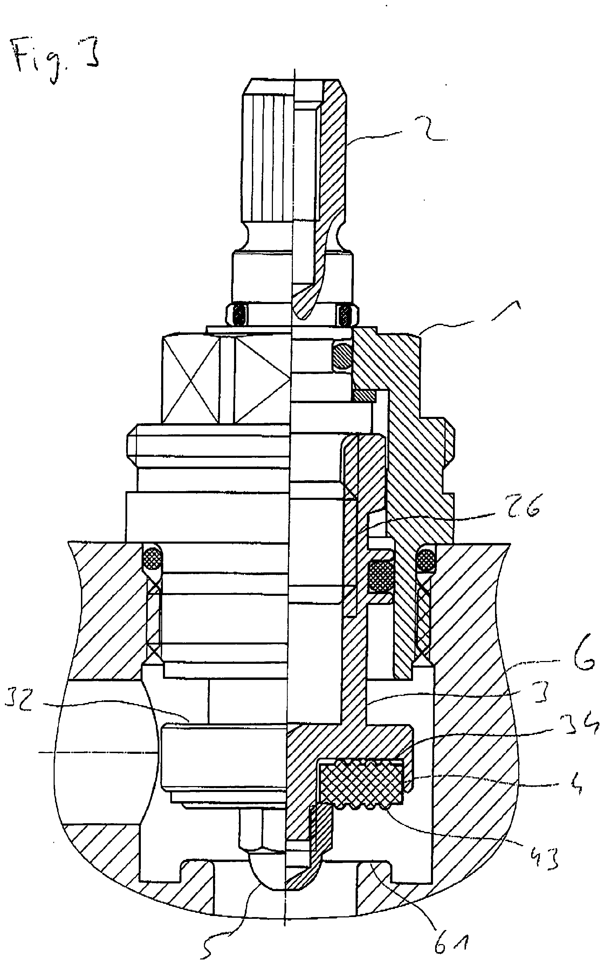

Im Ausführungsbeispiel gemäß Figur 3 weist die Dichtscheibe 4 an ihren Anlageflächen zwei konzentrisch angeordnete, kreisringförmig ausgebildete Rippen 43 auf. Diese Rippen 43 weisen aufgrund ihrer Dimensionierung eine zur Dichtscheibe 4 höhere Elastizität auf, wodurch eine höhere Dichtwirkung erzielt ist. Dabei bildet sich beim Anpressen der Dichtscheibe 4 gegen den Grund der Nut 34 bzw. gegen den Ventilsitz 61 eine die Dichtwirkung fördernde Vorspannung aus.

Der Ventilkörper 3 ist derart in das Kopfstück 1 eingebracht, dass der Außensechskant 38 des Ventilkörpers 3 an dem Innensechskant 18 des Kopfstücks 1 anliegt, wodurch der Ventilkörper 3 in dem Kopfstück 1 verdrehsicher gehalten ist. In das Innengewinde 39 des Ventilkörpers 3 ist das Außengewinde 26 der Spindel 2 eingeschraubt, wobei die Spindel 2 über die Wellensicherung 73 innerhalb des Kopfstücks 1 axial fixiert ist. Eine Drehung der Spindel 2 bewirkt somit eine axiale Bewegung des Ventilkörpers 3 innerhalb des Kopfstücks 1. Diese axiale Bewegung des Ventilkörpers 3 ist begrenzt durch den Anschlag 12 des Kopfstücks 1. Unterhalb des Innengewindes 39 ist in dem hohlzylindrischen Teil 31 eine Fettkammer 311 angeordnet. Die Fettkammer 311 dient der Sicherstellung des Gewindelaufs zwischen Innengewinde 39 des hohlzylindrischen Teils und Außengewinde 26 der Spindel 2.

In montiertem Zustand des Ventiloberteils liegt in der entgegengesetzten Endstellung des Ventilkörpers 3 die an dem Ventilstempel 33 angeordnete Dichtscheibe 4 am Ventilsitz 61 des Gehäuses 6 an. Dabei ist die Dichtwirkung durch die im Ausführungsbeispiel sehr schmale Gestaltung des Ventilsitzes 61 aufgrund der aus Kunststoff hergestellten Dichtscheibe 4 nicht gefährdet. Im Gegensatz zu den im Stand der Technik verwendeten Gummiringen - oder Scheiben, bei denen sich derartige Gestaltungen des Ventilsitzes aufgrund ihrer geringen Formstabilität als sehr problematisch erweisen, wird die in der Nut 34 angeordnete Dichtscheibe 4 vorliegend - wenn überhaupt - nur geringfügig verformt; die flächige Abdichtung des Ventilsitzes 61 ist weiterhin gewährleistet. Dabei wird die Dichtwirkung durch die angeordnete Rippenstruktur und/oder die konvexe Ausbildung der Anlageflächen signifikant erhöht.

## Patentansprüche

1. Ventiloberteil mit einem Kopfstück, einer das Kopfstück mittig durchsetzenden Spindel und einem über die Spindel betätigbaren Ventilkörper zur Anlage an einem Ventilsitz eines Gehäuses, wobei an dem Ventilkörper auf seiner der Spindel abgewandten Seite eine Dichtvorrichtung angeordnet ist, die einen mit einer Dichtung versehenen Ventilstempel aufweist, wobei die Dichtung durch eine Dichtscheibe (4) gebildet ist, die aus Kunststoff hergestellt ist, **dadurch gekennzeichnet, dass** zumindest eine Anlagefläche der Dichtscheibe (4) konvex ausgebildet ist, wobei die Dichtscheibe (4) zumindest auf ihrer dem Ventilstempel (31) abgewandten Seite mit einer waffelartigen Mikrostruktur und/oder mit einer ein Rippenmuster aufweisenden Makrostruktur versehen ist.

2. Ventiloberteil nach Anspruch 1, **dadurch gekennzeichnet, dass** das Rippenmuster aus ringförmigen Rippen gebildet ist.

3. Ventiloberteil nach einem der vorgenannten Ansprüche, **dadurch gekennzeichnet, dass** die Dichtscheibe aus Polytetrafluorethylen (PTFE) hergestellt ist.

4. Ventiloberteil nach einem der Ansprüche 1 bis 3, **dadurch gekennzeichnet, dass** die Dichtscheibe aus PE-UHMW hergestellt ist.

5. Ventiloberteil nach einem der vorgenannten Ansprüche, **dadurch gekennzeichnet, dass** der Ventilstempel konzentrisch zur Spindelachse mit einer Nut (34) zur Aufnahme der Dichtscheibe versehen ist.

6. Ventiloberteil nach Anspruch 5, **dadurch gekennzeichnet, dass** an seiner der Nut (34) zugewandten Seite auf der Spindelachse ein Stift (36) angeformt ist, der zur Aufnahme eines Befestigungselementes zur Fixierung der Dichtscheibe (4) ausgebildet ist.

7. Ventiloberteil nach Anspruch 6, **dadurch gekennzeichnet, dass** der Stift (36) zumindest bereichsweise mit einem Gewinde (37) zur Aufnahme eines Schrauben- oder Mutternkörpers versehen ist.

8. Ventiloberteil nach Anspruch 7, **dadurch gekennzeichnet, dass** der Stift (36) mit einem Außengewinde (37) versehen ist, auf dem eine Hutmutter (5) die Dichtscheibe (4) einklemmend aufgeschraubt ist.

9. Armaturengehäuse mit einem Ventiloberteil nach einem der vorgenannten Ansprüche, **dadurch gekennzeichnet, dass** der Außendurchmesser des Ventilstempels im Wesentlichen dem Innendurchmesser des Anschlussgewindes (13) des Armaturengehäuses entspricht.

## Claims

1. Valve top having a head part, straight through which a spindle passes and having a valve body to rest against a valve seat of a housing and to be actuated by means of the spindle, where arranged on the valve body on its side facing away from the spindle is a sealing device that incorporates a valve plunger provided with a seal, where the seal is formed by a sealing disc (4) that is manufactured from plastic, **characterised in that** at least one contact surface of the sealing disc (4) is formed convex, where the sealing disc (4) is at least on its side facing away from the valve plunger (31) provided with a waffled microstructure and/or a macrostructure incorporating a ribbed pattern.

2. Valve top in accordance with claim 1, **characterised in that** the ribbed pattern is formed of annular ribs.

3. Valve top in accordance with any one of the foregoing claims, **characterised in that** the sealing disc is made of polytetrafluorethylene (PTFE).

4. Valve top in accordance with any one of claims 1 to 3, **characterised in that** the sealing disc is made of PE-UHMW.

5. Valve top in accordance with any one of the foregoing claims, **characterised in that** the valve plunger is provided with a groove (34) concentric with the spindle axis and designed to receive the sealing disc.

6. Valve top in accordance with claim 5, **characterised in that** a pin (36) that is formed to receive a fastening element for fixing the sealing disc (4) in position is formed on the spindle axis on its side facing the groove (34).

7. Valve top in accordance with claim 6, **characterised in that** the pin (36) is at least partly provided with a screw thread (37) to receive a screw body or a nut body.

8. Valve top in accordance with claim 7, **characterised in that** the pin (36) is provided with an external thread (37) onto which a cap nut (5) is screwed so as to clamp the sealing disc (4) in position.

9. Valve housing with a valve top in accordance with any one of the foregoing claims, **characterised in that** the outer diameter of the valve plunger essentially matches the inner diameter of the connecting thread (13) of the valve housing.

## Revendications

1. Partie supérieure de soupape présentant une pièce têtière, une broche qui traverse la pièce têtière en son centre et un corps de soupape qui peut être actionné par la broche, venant appliquer contre un siège de soupape d'un carter, sachant que contre le corps de soupape, sur son côté ne regardant pas la broche, est agencé un dispositif d'étanchéité présentant un axe de soupape muni d'un joint, sachant que le joint est formé par un disque d'étanchéité (4) fabriqué en plastique, **caractérisé en ce qu'**au moins une surface d'applique du disque d'étanchéité (4) est configurée convexe, sachant que le disque d'étanchéité (4) est muni, au moins sur son côté ne regardant pas l'axe (31) de soupape, d'une microstructure gaufrée et/ou d'une macrostructure présentant un motif nervuré.

2. Partie supérieure de soupape selon la revendication 1, **caractérisée en ce que** le motif nervuré est formé par des nervures de forme annulaire.

3. Partie supérieure de soupape selon l'une des revendications précédentes, **caractérisée en ce que** le disque d'étanchéité est fabriqué en polytétrafluoréthylène (PTFE).

4. Partie supérieure de soupape selon l'une des revendications 1 à 3, **caractérisée en ce que** le disque d'étanchéité est fabriqué en PE-UHMW.

5. Partie supérieure de soupape selon l'une des revendications précédentes, **caractérisée en ce que** l'axe de soupape est muni, concentriquement à l'axe de la broche, d'une rainure (34) recevant le disque d'étanchéité.

6. Partie supérieure de soupape selon la revendication 5, **caractérisée en ce que** sur son côté regardant la rainure (34) sur l'axe de broche, une tige (36) a été moulée qui est configurée pour recevoir un élément de fixation pour immobiliser le disque d'étanchéité (4).

7. Partie supérieure de soupape selon la revendication 6, **caractérisée en ce que** la tige (36) est munie au moins localement d'un filetage (37) servant à recevoir un corps de vis ou d'écrou.

8. Partie supérieure de soupape selon la revendication 7, **caractérisée en ce que** la tige (36) est munie d'un filetage extérieur (37) sur lequel est vissé un écrou borgne (5) servant à coincer le disque d'étanchéité (4).

9. Carter de robinetterie comprenant une partie supérieure de soupape selon l'une des revendications précédentes, **caractérisé en ce que** le diamètre extérieur de l'axe de soupape correspond pour l'essentiel au diamètre intérieur du filetage de raccordement (13) du carter de robinetterie.
